# EUROPEAN PATENT APPLICATION

(11) **EP 3 135 422 A1**
(43) Date of publication of application: **01.03.2017**
(21) Application number: 15460051.4
(22) Date of filing: 22.08.2015
(51) Int. Cl.: B23K 9/32

(54) **MULTISTAGE BACKING GAS NOZZLE**

(71) Applicant: METALKO Spolka. z o.o., 85-825 Bydgoszcz (PL)
(72) Inventor: Medaj, Daniel, 85-825 Bydgoszcz (PL); Gietka, Tomasz, 85-796 Bydgoszcz (PL); Ciechacki, Krzysztof, 85-792 Bydgoszcz (PL); Rzesny, Jan, 86-031 Osielsko-Niwy (PL)
(74) Representative: Jankowski, Piotr

(57) **Abstract**

The invention is a multistage backing gas nozzle with variable geometry for shielding the root of a weld in locations with difficult access during welding with non-consumable tungsten electrode in the atmosphere of inert gases, which has two retaining rings 1 in the form of flexible circular membranes and a telescopic tube 2 having a gas inlet port 6 situated in the upper part, being connected through a stepless clamp connector 3 and having a head 4 situated at the end in the form of a cylindrical cap to which replaceable backing gas feeding units 5 are connected at a right angle in the form of cylindrical channels with telescopic cylinders with holes at their side walls through which a backing gas is supplied.

## Description

The invention is a multistage backing gas nozzle with variable geometry for shielding the root of a weld in locations with difficult access during welding with non-consumable tungsten electrode in the atmosphere of inert gases (TIG - tungsten inert gas; A-TIG - activated tungsten inert gas or GTAW - gas tungsten arc welding), such as argon, helium or the mixture of argon and helium.

The backing gas nozzle has been designed for butt welding of tubes, using non-consumable tungsten electrode in the atmosphere of inert gases, such as argon, helium or the mixture of argon and helium. The tubes are made of stainless and acid-resistant steel, dual-phase Duplex steel, as well as titanium and its alloys.

In well-known solutions of butt welding of tubes, using shield rings with double sealing, the shield ring is inserted in a tube and the seals create two walls, the purpose of which is to reduce the space to which a shielding gas is supplied. The entire space between the seals is filled with a shielding gas. The root is protected at the entire perimeter, which has the same shielding gas flow value. The shielding gas must fill the entire space between the shield rings.

A drawback of these solutions is a fact that in order to shield the welding point, we have to fill the entire space between the rings; the shield is the same at the entire perimeter of the tube. In the case of the butt welding of two tubes or a tube with an elbow with the same internal diameters, this solution is feasible. However, the problem arises when, for example, there is a difference in diameters of welded elements.

The solution that is provided in the multistage nozzle pursuant to the invention lies in the structure that makes it possible during the welding process to supply a shielding gas that creates a protective atmosphere for the root of a weld directly within the welded joint in the areas with difficult access. Note that the width of the shielded area is between 30-80 mm and depends on the diameter and thickness of the welded tubes. Narrowing the shielded area minimises the consumption of the shielding gas, thanks to the use of continuous adjustment of the shielded area location.

The multistage backing gas nozzle has two retaining rings in the form of circular flexible membranes and a telescopic tube having a gas inlet port at the upper part, being connected through a stepless clamp connector and having a head at the end in the form of a cylindrical cap to which replaceable backing gas feeding units are connected at a right angle in the form of cylindrical channels with telescopic cylinders that have holes on the side walls through which backing gas is supplied.

The nozzle structure allows the shielding gas to protect and shield the point before, during and after welding at the entire perimeter of a welded tube only within the ring whose height is equal to the width of the replaceable backing gas feeding unit. Shielding gas outlet ports have telescopic structure which enables them to perfectly adjust to the diameter of a welded tube. A telescopic feeding tube through which the shielding gas is supplied retracts to an appropriate length, depending on the location of a welding joint. This way, after tack welding of a longer section of a tube arrangement, it is enough to move the multistage backing gas nozzle inside. The head is a permanent element, while backing gas shielding units are the only replaceable elements and their length depends on the diameter of welded tubes.

The solution pursuant to the invention offers a range of advantages, because thanks to it the shielding gas cools and shields the point before, during and after welding at the entire perimeter of the welded tube only within the ring whose height is equal to the width of a replaceable backing gas feeding unit.

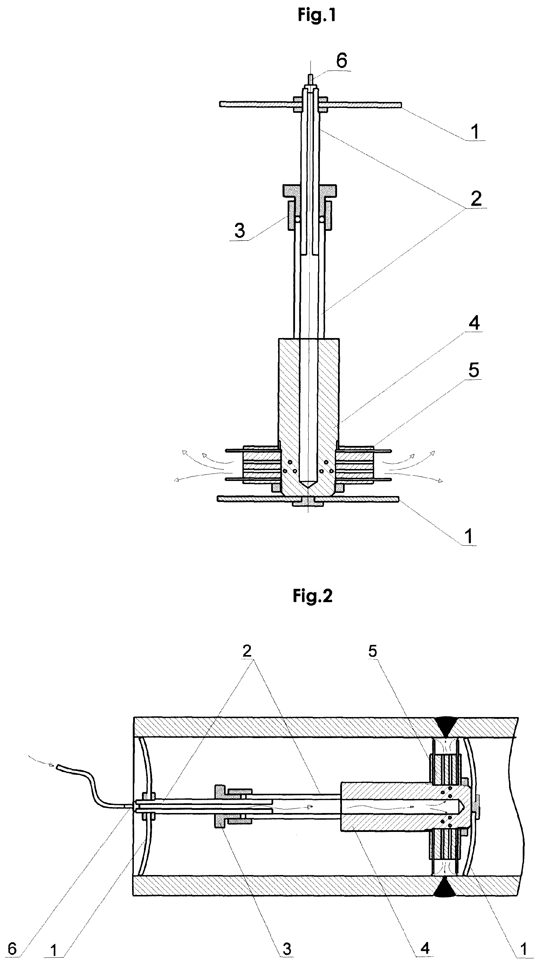

The invention is presented in more details in the visual material attached, where Fig. 1 is the cross-section of the backing gas nozzle and Fig. 2 - the cross-section of the nozzle in a welded joint.

The backing gas nozzle comprises two flexible retaining rings 1 made of thermoplastic elastomer resistant to the temperature of up to 800°C, a telescopic feeding tube 2, a stepless clamp connector 3, a head 4, a replaceable backing gas feeding unit 5, and shielding gas inlet port 6.

The invention has been presented in more details in the embodiment.

The nozzle pursuant to the invention has two retaining rings 1 at the top made of thermoplastic elastomer resistant to the temperature of up to 800°C; the rings have the form of circular membranes and they are responsible for setting the nozzle on the telescopic feeding tube 2 in the symmetry axis of the welded cylindrical object and if there are any leaks within the backing gas feeding unit, the rings are responsible for limiting the space where the backing gas is present. The telescopic feeding tube 2 is connected through a stepless clamp connector 3, which allows increasing the length range of the shielding atmosphere. The telescopic feeding tube consists of several tubes joined together and, depending on the location of the weld length to be shielded, the tube retracts to an appropriate length. At the end of the telescopic feeding tube 2 there is a head 4, to which, at the sides and at a right angle, replaceable backing gas feeding units 5 are mounted using a screw joint; the units have the form of two cylindrical channels connected with a screw joint to the head 4. The channels contain telescopic cylinders with holes on their side walls, through which the backing gas is supplied. The telescopic structure allows the front surfaces of the cylinders to retract to an appropriate height and stop when they touch the inner wall of the welded tube.

The retaining rings 1 are used interchangeably, depending on the diameter of a welded tube; the higher diameter of a welded tube, the higher diameter and thickness of the retaining ring. The rings 1 are situated on the telescopic feeding tube 2 made of heat-resistant steel in the form of tubes joined in a telescopic manner; the tube is connected with a quick release coupling through a stepless clamp connector 3 in the form of a valve in a seat. Thanks to the telescopic structure of the feeding tube 2, the length of the shielding atmosphere has been increased. In the case of coil pipe welding, some of its parts are welded after making tack welds, which create a longer segment (they cannot be welded segment-by-segment), and as a result we increase the length range of the shielding.

## Claims

1. A multistage backing gas nozzle having two flexible retaining rings 1 in the form of flexible circular membranes and a telescopic tube 2 connected through a stepless clamp connector 3, at the end of which there is a head 4 in the form of a cylindrical cap to which replaceable backing gas feeding units 5 are connected at a right angle in the form of cylindrical channels with telescopic cylinders with holes at their side walls through which a backing gas is supplied.
